# EUROPEAN PATENT APPLICATION

(11) **EP 1 420 200 A1**
(43) Date of publication of application: **19.05.2004**
(21) Application number: 02025360.5
(22) Date of filing: 14.11.2002
(51) Int. Cl.: F16L 37/092

(54) **Quick connector**

(71) Applicant: Tsai Tzu-Liang, Kaohsiung City (TW)
(72) Inventor: Tsai Tzu-Liang, Kaohsiung City (TW)
(74) Representative: LOUIS- PÖHLAU- LOHRENTZ

(57) **Abstract**

A quick connector includes a body (4) and a tube constrictor (5). The body (4) has a center through hole (41) for liquid to flow through, and a constrictor groove (42) formed in the center through hole (41) and an O-shaped ring (43) fitted in the constrictor groove (42). The constrictor groove (42) has an innermost wall (420), an intermediate straight wall (421) and an outer sloped wall (422) orderly arranged. The tube constrictor (5) is made integral, having a plurality of elastic petals (52) spaced apart with gaps (53) and each petal (52) has a push member (522) formed on an inner wall for tighty pushing against the outer surface of a tube (6) inserted in the center hole (41) of the tube constrictor (5) and a pointed tip (521) formed at two sides of a lower end of each petal (52) for the tube constrictor (5) may loosen the tube (6) to be pulled out and inserted in.

## Description

### BACKGROUND OF THE INVENTION

This invention relates to a quick connector, particularly to one possible to quickly connect a tube without scarring an outer surface of the tube for liquid to flow through.

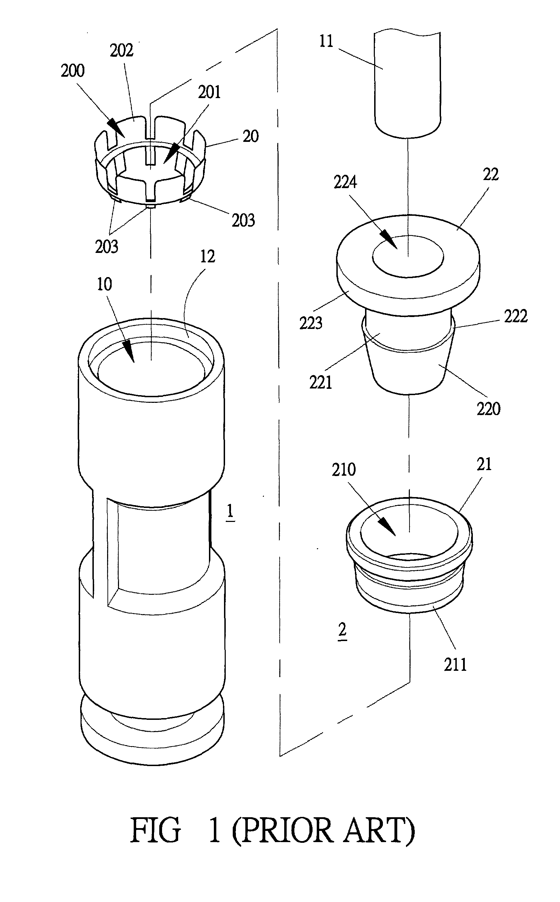

A first conventional quick connector for tubes shown in Fig. 1 includes a body 1 with a center through hole 10 for receiving a tube therein for liquid to flow through, and a tube constricting unit 2 consisting of a tube constrictor 20, a sleeve 21 and a press button 22. The tube constricting unit 2 is fitted in the center through hole 10 of the body 1, and the tube constrictor 20 is made of metal, having an inlet 200 of a large diameter and an outlet 201 of a small diameter for a tube 11 to pass through. The inlet 200 is provided with a plurality of upright petals 202 spaced apart equidistantly and the outlet is provided with a plurality of sloped-inward petals 203 spaced apart equidistantly, and the petals 202 are larger than the petals 203. The petals 203 are useful for tightening the outer surface of the tube 11. The .sleeve 21 fits in the inner annular wall 12 of the body 1, preventing the tube constrictor 20 from falling off the body 1, and having a center hole 210 for the press button 22 to fit therein. The press button 22 has a cone-shaped portion 220, a cylindrical portion 221 and an intermediate connect portion 222 between the both 220 and 221. So when the press button 22 is forcefully inserted through the center hole 210 of the sleeve 21, the intermediate connect portion 222 can push the front annular wall 211 of the sleeve 21 to keep the press button 22 stable and able to be pressed, with a large annular portion 223 of the press button 22 located outside the body 1 for easily pressed. The press button further has a center hole 224 for the tube 11 to extend in.

The first conventional quick connector has a complicated structure, and irrespective of the tube constricting unit 2 having function of tightly connecting a tube, its cost is very high. Further, the connector has a comparatively large size owing to its complicated components, not advantageous. In addition, the outer surface of a tube is liable to be scarred by the tube constrictor 20, or even broken if worse. And whenever a tube is to be replaced with a new one, the press button has to be loosened, not convenient.

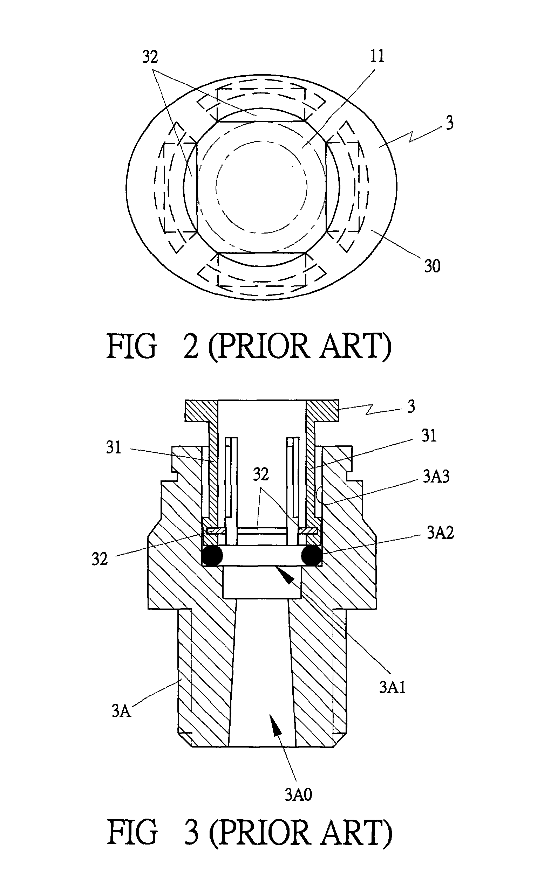

A second conventional quick connector shown in Figs. 2 and 3 includes a body 3A and a tube constrictor 3. The body 1 has a center through hole 3A0 with an constrictor groove 3A1 formed in the hole 3A0, and a O-shaped ring 3A2 fitted in the bottom of the constrictor groove 3A1. The tube constrictor 3 is inserted in the constrictor groove 3A1, contacting an inner wall 3A3 of the constrictor groove 3A1, having a flange 30 formed in an outer end, and a plurality of upright elastic petals 31 spaced apart and extending down from the flange 30 so as to elastically tighten a tube 11 and a plurality of clasp members 32 made of metal, which are formed integral with the tube constrictor 3 during a forming process.

However, the second conventional quick connector still has the following disadvantages.
1.In manufacturing processes, the metal clasping members 32 have to be placed in a mold of forming the tube constrictor 3, delaying the speed of manufacture.
2.The tube constrictors may become defective, if the metal clasp members 32 are placed in the mold improperly.
3.The equipment for making the tube constrictors costs high, not paying.
4.The clasp members make up point contacting against a tube, as shown in Fig. 2, although there are four petals 31 to push the tube 11, they practically only function as point pressing, with the tube east to be pulled out, and even together with the tube constrictor itself.
5.The clasp members 32 easily scar the outer surface of a tube 11, disadvantageous in repeated use of the tube 11, and may even lead to liquid leak.
6.The clasp members 32 may stick into the tube 11 if the tube 11 is not pulled out for a long period of time, causing a problem of difficulty in taking off the tube 11.
7.If the tube constrictor should be pushed further inward after the clasp members 32 is pressed against the tube 11 as to squeeze the O-shaped ring 3A2 to deform, the tube 11 may not be quickly pulled off, giving rise to difficulty in replacing the tube 11.
8. In handling, a worker has to use one hand for pressing the tube constrictor 3 and the other hand for pulling the tube 11, and it needs a large force, so sometimes the worker cannot pull out the tube 11.

### SUMMARY OF THE INVENTION

This invention has been devised to offer a quick connector having the following features.
1.A quick connector includes a body and a tube constrictor, and the body has an O-shaped ring inside for preventing liquid from leaking out and convenient for replacing and connecting a tube, and an inner wall provided with a sloped wall and a straight wall for easily tightening or loosening a tube.
2.The tube constrictor is made integral, having a large annular wall and a plurality of petals around the large annular wall, a plurality of push members formed on an inner wall of each petal for pushing against the tube, and a pointed tip at two sides of a lower end of each petal for easily pulling out the tube.

### BRIEF DESCRIPTION OF DRAWINGS

This invention will be better understood by referring to the accompany drawings, wherein:
Figure 1 is an exploded perspective view of a first conventional quick connector;
Figure 2 is an upper view of a second conventional quick connector;
Figure 3 is a cross-sectional view of the second conventional quick connector;
Figure 4 is an exploded perspective view of a quick connector in the present invention;
Figure 5 is a cross-sectional view of the quick connector in the present invention;
Figure 6 is a cross-sectional view of the quick connector in the present invention, showing a tube connected therein;
Figure 7 is a side view of a tube constrictor in the present invention; and,
Figure 8 is a cross-sectional view of the line A - A in Fig. 7.

### DETAILED DESCRIPTION OF THE PREFERRED

### EMBODIMENT

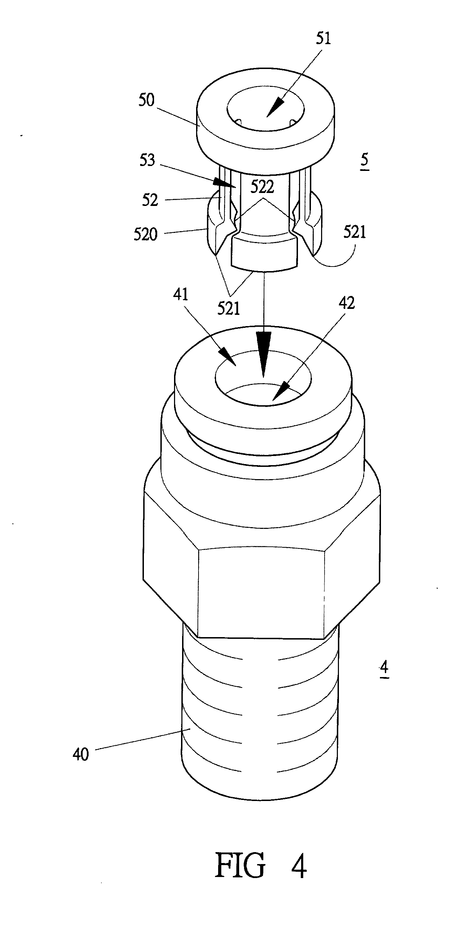

A preferred embodiment of a quick connector in the present invention, as shown in Figs. 4, 5 and 6, includes a body 4 and a tube constrictor 5 as main components combined together.

The body 4 is made integral, having male threads 40, a center through hole 41 for liquid to flow through, a constrictor groove 42 provided with an innermost wall 420, an intermediate straight wall 421 and an outer sloped wall 422 orderly formed in the center through hole 41, and an O-shaped ring 43 placed between the innermost wall 420 and the straight wall 421 for preventing liquid from leaking and loosening the tube 6 from the tube constrictor 3.

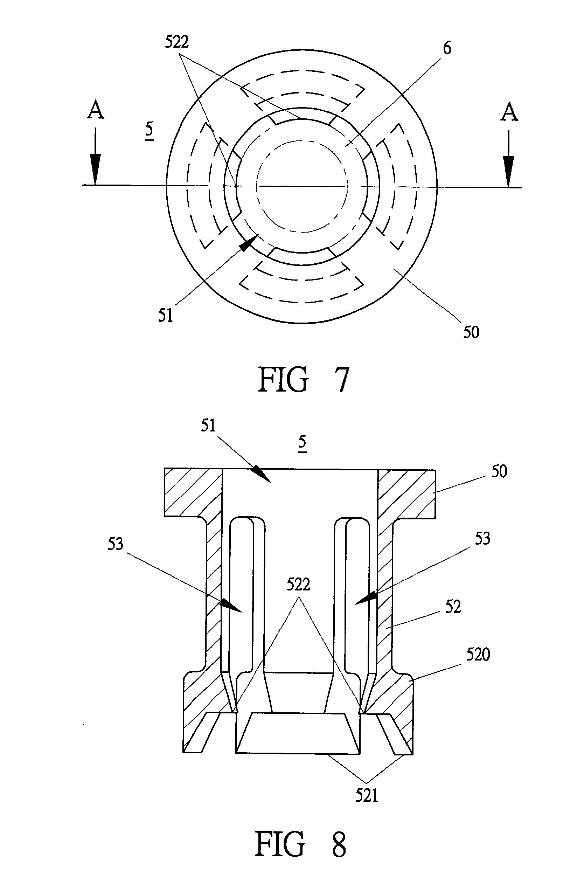

The tube constrictor 5 is made integral, as shown in Figs. 7 and 8, positioned in the constrictor groove 42 and having a flange 50 located outside the body 4, a center hole 51 for a tube 6 to extend therein, a plurality of elastic petals 52 spaced apart equidistantly with gaps 53 and extending down from the flange 50. Therefore, the petals 53 have respectively some resilience to expand and shrink, and a front curved wall 520, a pointed tip 521 formed at two sides thereof, and a push member formed on an inner lower portion thereof.

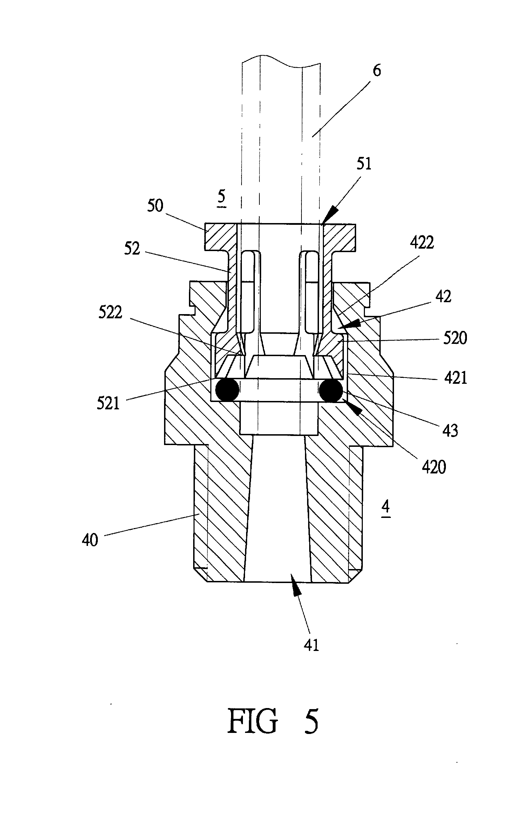

In using, a tube 6 is inserted in the center hole 51 of the tube constrictor 5, as shown in Fig. 5, for a proper length, and meanwhile the push members 522 of the petals 52 can push against the outer surface of the tube 6. As the push members 522 has its surface shaped to conform the outer surface of a tube 6, they can contact the outer surface of the tube 6 in a large dimension so that the tube 6 is not easily pulled out. Further, the tube constrictor 5 is made of plastic with no rigid hardness, so it cannot scar the outer surface of the tube 6, enabling the tube 6 repeatedly usable. When the tube 6 is kept inserted in the tube constrictor, not pulled out, the innermost wall 520 is pushed by the sloped wall 422 of the body 4 so that the petals 52 of the tube constrictor 5 may more tightly urge the tube 6, which is then not easily pulled out.

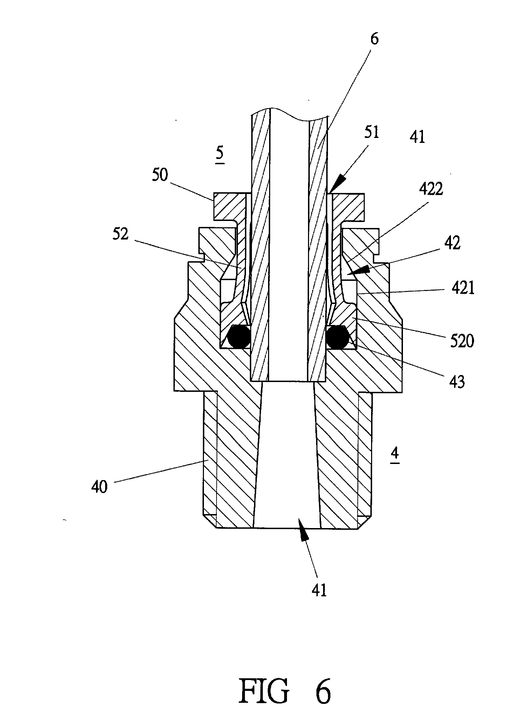

In case that the tube 6 is to be replaced with a new one, only use a hand to grip the tube 6 and press the tube constrictor 5 a little inward to force the pointed tips 521 1 slide along the O-shaped ring outward, as shown in Fig. 6. Then the push members 522 of the tube constrictor 5 may separate from the outer surface of the tube 6, which is then possible to be pulled out, quite simple to handle.

While the preferred embodiment of the invention has been described above, it will be recognized and understood that various modifications may be made therein and the appended claims are intended to cover all such modifications that may fall within the spirit and scope of the invention.

## Claims

1. A quick connector comprising:
A body having a center through hole, a constrictor groove formed in said center through hole, and an O-shaped ring fitted in the constrictor groove:
a tube constrictor inserted in the constrictor groove of said body, and having a flange formed in an outer end, a center hole for a tube to extend therein, a plurality of upright elastic petals spaced apart equidistantly and extending down from said flange, every two of said elastic petals separated by a gap, said elastic petals respectively having an innermost portion, said innermost portion having a pointed tip formed at two sides of its end and a push member formed integral on an inner surface to push against an outer surface of a tube inserted in said center through hole of said tube constrictor.

2. The quick connector as claimed in Claim 1, wherein said body is made integral, having male threads for fixing with something.
the quick connector as claimed in Claim 1, wherein said constrictor groove of said body has an innermost wall, an intermediate straight wall and an outer sloped wall orderly formed.
